Europäisches Patentamt

European Patent Office

Office européen des brevets

(19)

(11) Numéro de publication: **0 028 982**
**B1**

(12)                   **FASCICULE DE BREVET EUROPEEN** .

(45) Date de publication du fascicule du brevet: **15.02.84**

(51) Int. Cl.³: **F 24 J 3/02**

(21) Numéro de dépôt: **80401593.1**

(22) Date de dépôt: **07.11.80**

(54) **Panneau pour le captage de l'énergie solaire et installation en comportant application.**

(30) Priorité: **09.11.79 FR 7927637**

(43) Date de publication de la demande:
**20.05.81 Bulletin 81/20**

(45) Mention de la délivrance du brevet:
**15.02.84 Bulletin 84/7**

(84) Etats contractants désignés:
**BE DE GB IT NL**

(56) Documents cités:
**DE - A - 2 544 915**
**DE - A - 2 741 983**
**FR - A - 2 308 882**
**FR - A - 2 385 057**
**US - A - 4 055 163**

(73) Titulaire: **ROSSIGNOL S.A. Société dite:**
**F-53150 Montsurs (FR)**

(72) Inventeur: **Rossignol, Prosper André**
**Les Pensées**
**F-53150 Montsurs (FR)**
Inventeur: **Heaume, Jean Baptiste**
**54 Rue de la Senelle**
**F-53000 Laval (FR)**
Inventeur: **Salvaire, Laurent Olivier**
**17 Quai Sadi Carnot**
**F-53000 Laval (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

Panneau pour le captage de l'énergie solaire et installation en comportant application

L'invention a pour objet un panneau, de forme générale rectangulaire, en matière plastique moulée par extrusion-soufflage pour le captage de l'énergie solaire, dans lequel sont formés un serpentin pour la circulation d'un liquide à réchauffer, ainsi que deux éléments tubulaires adjacents à deux bords opposés du panneau, reliés aux extrémités respectives du serpentin pour l'admission et la sortie du liquide, l'un des éléments tubulaires constituant un tronçon de collecteur dont les extrémités sont adaptées pour pouvoir être raccordées de façon étanche aux tronçons de collecteur de deux panneaux identiques adjacents disposés latéralement.

Lorsque la température à laquelle l'eau doit être réchauffée est relativement basse, il est souhaitable que des panneaux du type mentionné puissent être utilisés à l'état nu, c'est-à-dire sans moyens d'isolation thermique et sans moyens pour créer un effet de serre, dans une installation groupant un nombre de panneaux suffisant pour élever à la température voulue le volume de liquide à traiter. Tel est le cas de l'eau d'une piscine découverte qui normalement doit être portée à 30°C environ et n'est que faiblement refroidie dans le bassin de la piscine dont l'exploitation est suspendue en saison froide.

S'il s'agit d'une piscine collective il est important, compte tenu du nombre élevé de panneaux capteurs à utiliser, de simplifier la construction et le mode de montage des panneaux pour réduire le volume des investissements nécessaires. A cet égard le choix comme matériau constitutif des panneaux d'une matière thermoplastique, telle que le polyéthylène à haute densité, mise en oeuvre suivant la technique de l'extrusion-soufflage, présente de l'intérêt en raison d'une possibilité de fabrication à faible coût. La nature propre de ce matériau rend toutefois souhaitable que les panneaux capteurs soient mis à l'abri pendant l'hiver alors que la piscine est hors service. Cette condition implique que les panneaux de l'installation de chauffage de l'eau puissent être facilement démontés, transportés et stockés pour être protégés des intempéries.

Le panneau du type mentionné connu par le brevet FR—A—2 385 057 ne satisfait pas aux conditions qui viennent d'être énoncées. Ce panneau connu est muni d'un cadre de contour adapté pour recevoir d'un côté une vitre à effet de serre et de l'autre une couche thermiquement isolante, en vue du montage du panneau par exemple sur le toit d'une maison. Si l'on tient compte de la nécessité imposée par la technique d'extrusion-soufflage, de limiter à 1 mètre environ la valeur maximale de la plus grande dimension du panneau, il n'est pas possible en pratique d'utiliser un tel panneau à l'état nu, notamment pour le chauffage d'une piscine car la longueur de 1 mètre serait insuffisante pour produire l'échauffement voulu.

Le but de l'invention est en conséquence de proposer un panneau capteur de construction économique, utilisable à l'état nu qui puisse être assemblé avec d'autres panneaux, sans recours à une main d'oeuvre spécialisée, pour constituer une installation de chauffage d'eau, et dont le démontage puisse lui aussi être exécuté très facilement. Un autre but de l'invention est une installation de chauffage solaire constituée par un assemblage de tels panneaux.

Le panneau suivant l'invention, qui est du type indiqué au début, est caractérisé en ce que l'élément tubulaire opposé au tronçon de collecteur constitue une tubulaire qui dans le plan du panneau est perpendiculaire au tube collecteur et est située au centre du bord du panneau correspondant, et en ce que ce bord comporte de part et d'autre de la tubulure centrale des moyens permettant un assemblage rapide avec le bord correspondant d'un panneau adjacent identique, disposé en bout et orienté à 180° par rapport au premier panneau.

Le parti adopté consistant à assembler, de préférence par emboîtement, deux panneaux pour constituer un élément capteur, lui-même prévu pour être assemblé avec d'autres éléments juxtaposés formés chacun des panneaux jumelés, tout en répondant à la condition d'économie dans la fabrication, permet de réaliser des éléments capteurs dont la dimension principale, de 2 m environ, assure un échauffement correct de l'eau en circulation et conduit à une utilisation rationnelle de l'espace affecté à une installation de chauffage solaire, par exemple pour l'équipement d'une piscine découverte. Les panneaux, qui sont évidemment de couleur sombre, par exemple noire ou vert mélèze, sont légers, peu encombrants et par conséquent de transport facile. Le procédé d'extrusion—soufflage produit des panneaux pratiquement prêts pour l'assemblage, dans lesquels l'une des extrémités du tube collecteur peut recevoir au moulage un filetage pour la liaison vissée avec un écrou à collerette prévu à l'extrémité correspondante d'un panneau adjacent. La mise en place de cet écrou demande seule une opération de finition, du reste très simple, puisqu'elle consiste à fixer par collage ou soudage dans l'extrémité du tube collecteur un manchon muni d'un collet battu retenant l'écrou à collerette. Si besoin est un manchon fileté peut aussi être prévu à la première extrémité.

Le raccord assurant la liaison hydraulique entre les deux panneaux d'un élément capteur peut lui-même être fixé par emboîtement dans les deux tubulures et comporter à cet effet deux embouts tubulaires munis chacun d'anneaux d'étanchéité toriques.

Les panneaux peuvent être posés directement sur un terrain présentant la pente convenable, que cette pente préexiste ou bien qu'elle soit obtenue par un profilage du sol exécuté spécialement. Pour l'ancrage des panneaux on peut alors utiliser des épingles fichées dans le sol traversant les panneaux au droit des tubes collecteurs et des joints d'assemblage au centre des éléments.

Le plus souvent les panneaux, ou plus précisément les éléments formés de panneaux jumelés, devront être posés, en position inclinée, sur un sol horizontal ou irrégulier. L'invention propose à cet effet de réaliser une ossature tubulaire comportant, pour supporter les rives des éléments, des tubes parallèles uniformément espacés dans un plan incliné, assemblés à leurs extrémités respectives avec une lisse haute portée par des poteaux verticaux fixés dans le sol et avec une lisse basse posée sur le sol. Cette disposition permet de former des mailles rectangulaires dans chacune desquelles est supporté un élément formé par l'assemblage de deux panneaux.

L'ossature tubulaire peut être agencée de manière à être montée et démontée facilement, à l'image de ce qui est prévu pour l'assemblage et le désassemblage des panneaux eux-mêmes. Pour ce faire les particularités suivantes peuvent être adoptées suivant l'invention:

— chaque poteau-support est constitué par un tube qui est emmanché dans un pied tubulaire ancré à demeure dans le sol et est retenu au moyen d'une épingle amovible dont une branche est enfilée à travers le tube et le pied tubulaire,
— la lisse haute est un tube posé sur la section terminale libre de chaque poteau et est assemblée avec ce dernier au moyen d'une épingle amovible dont une branche est enfilée à travers les branches repliées d'un étrier dont le fond est appuyé sur la lisse, et à travers le poteau,
— à chacune de ses extrémités chaque tube oblique, formant traverse, est muni d'une bride boulonnée comportant deux griffes qui sont en prise avec des faces opposées de la lisse tubulaire correspondante et peuvent, le cas échéant, être engagées et dégagées par basculement.

Pour être correctement appuyée sur le tube-support oblique correspondant, en vue d'un assemblage facile, chaque rive de panneau comporte avantageusement un rebord profilé en forme de quart de cylindre ainsi qu'un ou plusieurs perçages à travers lesquels peut être engagée l'une des branches d'un étrier dont le fond est appuyé sur les rebords adjacents de panneaux juxtaposés et dans les extrémités repliées duquel peut être insérée une épingle amovible mise en prise avec la face inférieure du tube oblique sous-jacent aux deux rebords.

L'invention sera explicitée au cours de la description qui va suivre, en se référant au dessin annexé dans lequel:—

la fig. 1 est une vue en perspective représentant partiellement une installation de chauffage solaire qui comporte une ossature tubulaire supportant des panneaux capteurs;

la fig. 2 est une vue en perspective, à plus grande échelle, montrant l'assemblage d'un poteau avec une lisse haute de l'ossature tubulaire et d'un tube-support oblique avec cette lisse;

la fig. 3 est une vue en perspective du joint d'assemblage de deux panneaux;

la fig. 4 est une vue en perspective montrant l'assemblage d'un panneau avec deux tubes-supports;

la fig. 5 est une vue en coupe suivant la ligne 5—5 de la figure 4;

la fig. 6 est une vue en perspective montrant des panneaux posés directement sur le sol;

la fig. 7 est une vue en coupe suivant la ligne 7—7 de la figure 6;

la fig. 8 représente l'extrémité d'un tube collecteur muni d'un soufflet.

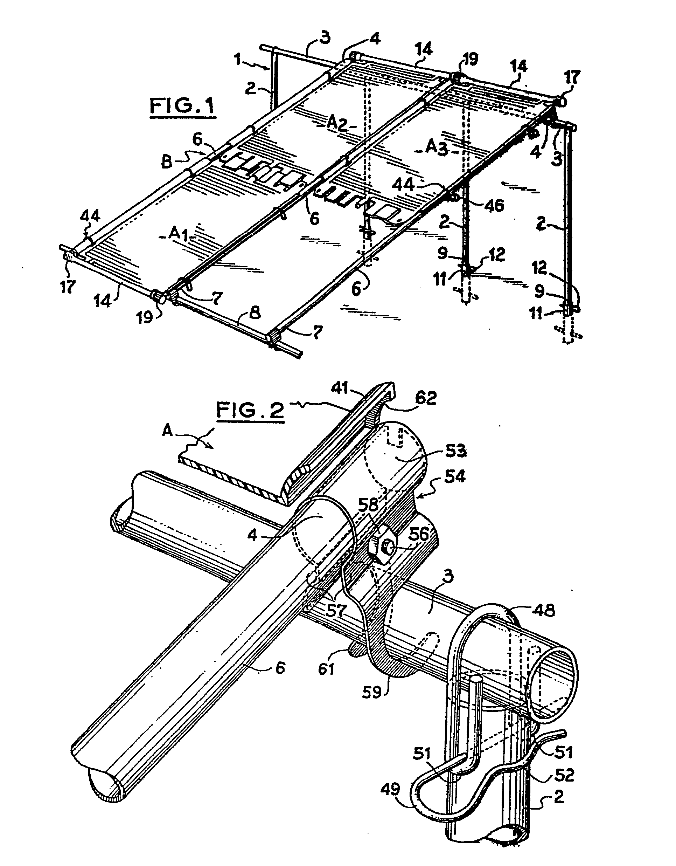

La figure 1 représente une ossature tubulaire 1 comprenant des poteaux verticaux 2 fixés dans le sol et uniformément espacés dans un même plan, qui supportent une lisse tubulaire horizontale 3 avec laquelle est assemblée l'extrémité haute 4 de tubes 6, parallèles entre eux et uniformément espacés dans un plan incliné, dont l'extrémité basse 7 est elle-même assemblée avec une lisse tubulaire inférieure 8 posée sur le sol. Dans les mailles rectangulaires formées par les tubes 6, 7, 8 sont supportés des panneaux capteurs A, tous identiques. Deux de ces panneaux $A_1$ et $A_2$, assemblés bout à bout en formant un élément capteur B sont représentés dans l'une des mailles, tandis que dans la maille adjacente seul le panneau supérieur $A_3$ est représenté.

Chaque poteau 2 est constitué par un tube dont l'extrémité inférieure 9 est emmanchée de façon séparable dans un pied tubulaire 11 ancré à demeure dans le sol et est retenue au moyen d'une épingle amovible 12 dont l'une des branches est enfilée à travers le pied tubulaire 11 et à travers l'extrémité 9 du tube.

Dans chaque panneau A, qui a la forme générale d'un rectangle dont la grande dimension, égale par exemple à 1 m environ, correspond à la direction des tubes-supports 6, et est en polyéthylène à haute densité (PEHD) moulé par le procédé d'extrusion-soufflage, est formé un serpentin 13 dont les ondes rectilignes sont parallèles à la petite dimension du panneau, égale par exemple à 0,5 m environ. L'une des extrémités 10 du serpentin est reliée à un tube collecteur 14 s'étendant sur toute la largeur d'un bord correspondant a du panneau, de manière à pouvoir être assemblé de façon étanche à ses deux extrémités au tube collecteur 14 de deux panneaux adjacents disposés latéralement. Pour cet assemblage l'une des extrémités, 16, du tube collecteur est munie d'un filetage 17 venu de moulage et son autre extrémité 18 reçoit, après démoulage du panneau, un court manchon fixé par collage ou soudage, sur lequel est formé un collet battu qui retient la collerette d'un écrou 19, muni d'un crénelage 21 permettant d'exécuter à la main, après insertion d'un anneau d'étanchéité, la jonction par vissage des deux tubes collecteurs.

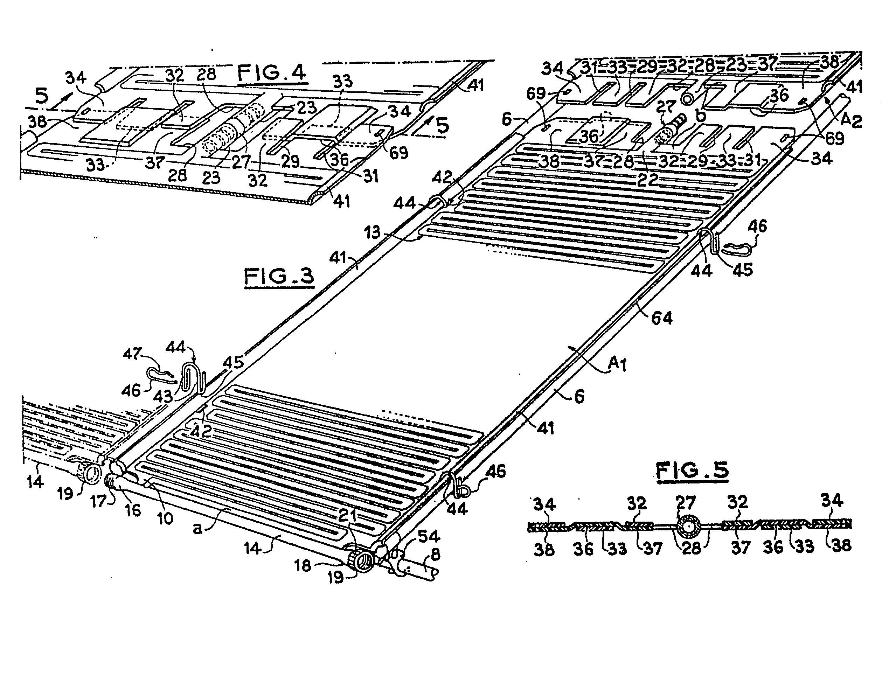

L'autre extrémité 22 du serpentin 13 est reliée, au centre du bord opposé $b$ du panneau tel que $A_1$ (fig. 3), à une tubulure 23, orientée perpendiculairement au tube collecteur 14, dans laquelle peut être emboîté l'un des embouts 24 muni d'anneaux d'étanchéité toriques 26 d'un raccord 27, dont l'autre embout 24 peut de la même façon être emmanché de façon étanche dans la tubulure centrale 23 d'un panneau adjacent $A_2$ orienté à 180° par rapport au panneau $A_1$, et assemblé en bout avec ce dernier. A cet effet le bord $b$ des panneaux $A_1$ et $A_2$ comporte, outre une encoche centrale 28 dégageant la tubulure centrale 23, d'un côté de cette dernière, deux découpes espacées 29, 31, orientées longitudinalement, qui délimitent avec l'encoche centrale 28 et la rive correspondante du panneau trois languettes 32, 33, 34, et de l'autre côté de la tubulure 23 une rainure peu profonde 36 de part et d'autre de laquelle sont formées deux plages 37, 38. La position et la dimension transversales de l'encoche, des découpes et de la rainure sont telles que les bords $b$ des panneaux $A_1$, $A_2$ peuvent s'interpénétrer par emboîtement, la languette principale 33 et les languettes auxiliaires 32, 34 du bord $b$ de l'un des panneaux s'engageant respectivement dans la rainure 36 et sur le dessus des plages 37, 38 du bord $b$ de l'autre panneau (fig. 4 et 5), alors que simultanément le raccord 27 emboîté initialement dans la tubulure 23 de l'un des bords s'emboîte dans la tubulure 23 de l'autre bord.

Chaque rive d'un panneau A comporte également un rebord 41 dont le profil en quart de cylindre est adpaté à la forme du tube-support 6, ainsi que deux perçages oblongs 42 dans chacun desquels peut être engagés l'une des branches 43, dont l'extrémité est repliée à 180° en 45, d'un étrier 44 dont le fond semi-circulaire prend appui sur les rebords 41 de deux panneaux A juxtaposés. Cet étrier assure l'assemblage séparable de deux panneaux avec le tube-support 6 sous-jacent aux deux rebords, grâce à une épingle 46 insérée à travers les replis 45 de l'étrier et dont l'une des branches 47, cintrée à cet effet, vient en prise avec la face inférieure du tube 6.

Comme le montre la figure 2, un mode d'assemblage analogue est prévu pour la solidarisation de la lisse haute 3 de l'ossature tubulaire avec les poteaux 2. La face inférieure de la lisse tubulaire 3 est maintenue au contact de la section terminale du poteau 2 au moyen d'un étrier 48 dont le fond épouse la forme cylindrique de la lisse 3 et d'une épingle 49 dont l'une des branches est enfilée à travers un repli 51 des branches de l'étrier, l'autre branche de l'épingle étant en prise par sa cambrure 52 avec la surface cylindrique du poteau.

La figure 2 représente également l'assemblage de l'extrémité supérieure 4 d'un tube-support oblique 6 avec la lisse tubulaire haute 3. La partie cylindrique 53 d'une bride 54 enserre rigidement l'extrémité 4 du tube 6, grâce à un boulon 56 traversant les deux pattes 57 de la bride et à un écrou 58, et ces deux pattes se prolongent vers le bas en formant deux griffes 59, 61, de forme semi-circulaire qui sont en prise avec deux faces opposées de la lisse tubulaire 3. Une bride identique 54 est utilisée pour l'assemblage de l'extrémité inférieure 7 du tube-support 6 avec la lisse tubulaire basse 8 (fig. 1 et 3). On notera que grâce au montage en opposition des deux griffes 59, 61, la bride 54 fixée au préalable sur l'extrémité 4 du tube 6 peut être mise en prise avec la lisse 3 par basculement. Pour le démontage la bride 54 peut rester fixée sur l'extrémité supérieure 4 du tube 6, l'autre bride 54 reliée à l'extrémité inférieure 7 étant seule dégagée du tube 6 par desserrage du boulon 56 correspondant.

La figure 2 montre enfin que l'extrémité du rebord 21 d'un panneau A qui est adjacente au tube collecteur 14 est munie d'une collerette 62 formant une butée à l'égard de la face terminale de la bride 54 fixée sur la lisse haute 3, ce qui permet un positionnement précis et immédiat sur l'ossature tubulaire d'un élément capteur B.

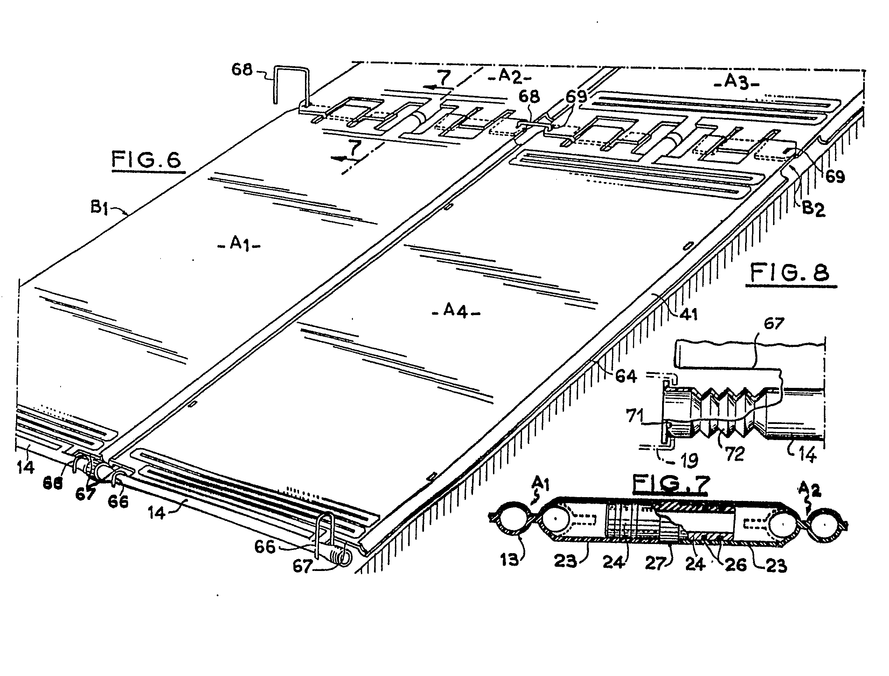

Dans l'exemple de montage de la figure 6 les panneaux $A_1$, $A_2$ et $A_3$, $A_4$ formant deux éléments solaires juxtaposés $B_1$, $B_2$, sont posés directement sur le sol qui présente une pente appropriée. Pour préserver les serpentins 13 de tout contact avec le sol les panneaux sont, par rapport à la disposition des figures 1 et 3, une position inversée, les rebords 41 venant en appui par leur arête libre 64 avec le sol en maintenant la surface principale des panneaux légèrement soulevée. Pour l'ancrage des panneaux des épingles étroites 66, enserrant à leurs extrémités les tubes collecteurs 14, sont fichées dans le sol, la branche interne de ces épingles traversant une échancrure 67 formée dans la zone adjacente des panneaux. De même des épingles larges 68, traversant des ouvertures en coïncidence 69 de la zone de recouvrement des bords assemblés $b$ des panneaux des éléments $B_1$ et $B_2$ sont fichées dans le sol.

Dans le cas où, à l'extrémité 16 du tube collecteur 14, le filetage 17 qui serait obtenu directement par le procédé de moulage par extrusion-soufflage risquerait de présenter une résistance insuffisante, il est possible de prévoir une opération de finition complémentaire, équivalente à celle décrite pour l'extrémité 18, consistant à utiliser un manchon rapporté après démoulage, fileté extérieurement, et fixé par collage ou soudage sur l'extrémité 16.

Dans la variante de la Fig. 8, l'extrémité 18 du tube tube collecteur 14 forme à proximité du collet battu terminal 71 un soufflet 72 venu de moulage, qui rend déformable la zone correspondante du tube en permettant à ce dernier d'absorber des dilatations thermiques et de s'adapter à tout défaut d'alignement par rapport au tube collecteur d'un panneau adjacent.

**Revendications**

1. Panneau, de forme générale rectangulaire, en matière plastique moulée par extrusion-soufflage, pour le captage de l'énergie solaire, dans lequel sont formés un serpentin (13) pour la circulation d'un liquide à réchauffer, ainsi que deux éléments tubulaires (14, 23) adjacents à deux bords opposés du panneau, reliés aux extrémités respectives du serpentin pour l'admission et la sortie du liquide, l'un des éléments tubulaires constituant un tronçon de collecteur (14) dont les extrémités sont adaptées pour pouvoir être raccordées de façon étanche aux tronçons de collecteur de deux panneaux identiques adjacents (A), disposés latéralement, caractérisé en ce que l'élément tubulaire opposé au tronçon de collecteur (14) constitue une tubulure (23) qui dans le plan du panneau est perpendiculaire au tube collecteur et est située au centre du bord du panneau (b) correspondant, et en ce que ce bord comporte de part et d'autre de la tubulure centrale des moyens permettant un assemblage rapide avec le bord correspondant d'un panneau adjacent identique (A), disposé en bout et orienté à 180° par rapport au premier panneau.

2. Panneau suivant la revendication 1, caractérisé en ce que les moyens d'assemblage de deux panneaux adjacents ($A_1$, $A_2$) sont du type à rainure et languette.

3. Panneau suivant la revendication 2, caractérisé en ce que le bord (b) d'un panneau (A), qui est opposé au bord (4) muni du tube collecteur (14) comporte, de part et d'autre de la tubulure centrale (23), une rainure (36) et au moins une languette (33) adaptée pour s'engager par emboîtement dans la rainure (36) du bord (b) d'un panneau (A) adjacent.

4. Panneau suivant la revendication 3, caractérisé en ce que la partie centrale du bord (b) d'un panneau (A) comporte une encoche (28) dégageant la tubulure centrale (23) et, de part et d'autre de la rainure (36), deux plages (37, 38), ainsi que de part et d'autre de la languette principale (33) deux découpes (29, 31) délimitant avec l'encoche centrale (28) et avec la rive correspondante du panneau deux languettes auxiliaires (32, 34) adaptées pour s'appliquer au contact des plages (37, 38) du bord (b) d'un panneau (A) adjacent.

5. Panneau suivant l'une des revendications 1 à 4, caractérisé en ce que chaque rive du panneau comporte un rebord profilé (41) qui a par exemple la forme d'un quart de cylindre et dont l'arête libre (64) est espacée, dans la direction perpendiculaire au plan du panneau, de la face adjacente de ce dernier.

6. Panneau suivant la revendication 1, caractérisé en ce qu'à l'extrémité (16) du tube collecteur (14) le filetage (17) est, ou bien venu de moulage, ou bien formé sur un manchon rapporté après démoulage.

7. Panneau suivant la revendication 6, caractérisé en ce qu'à l'extrémité (18) du tube (14) est rapporté après démoulage un manchon muni d'un collet battu qui retient un écrou à collerette (19).

8. Panneau suivant l'une des revendications 1 à 7, caractérisé en ce qu'à proximité de l'une de ses extrémités (16, 18) le tube collecteur (14) forme un soufflet (72).

9. Installation de chauffage solaire comportant un certain nombre d'éléments capteurs juxtaposés, caractérisé en ce que chaque élément capteur (B) est obtenu par assemblage bout à bout de deux panneaux (A) conformes à l'une des revendications 1 à 8 la liaison hydraulique entre les deux panneaux étant assurée comme connu en soi au moyen d'un raccord (27) reliant de façon étanche les tubulures centrales adjacentes (23).

10. Installation suivant la revendication 9, caractérisé en ce que les éléments (B) sont posés directement sur le sol par appui de l'arête libre (64) des rebords de panneau (41).

11. Installation suivant la revendication 10, caractérisé en ce que l'ancrage dans le sol des éléments (B) est obtenu au moyen d'épingles (66, 68) traversant les panneaux (A) et fichées dans le sol.

12. Installation suivant la revendication 9, caractérisée par une ossature tubulaire (1) comportant, pour supporter les rives des éléments (B), des tubes parallèles (6) uniformément espacés dans un plan incliné, assemblés à leurs extrémités respectives (4, 7) avec une lisse haute (3) portée par des poteaux verticaux (2) fixés dans le sol et avec une lisse basse (8) posée sur le sol.

13. Installation suivant la revendication 12, caractérisée en ce que chaque poteau-support est constitué par un tube (2) qui est emmanché dans un pied tubulaire (11) ancré à demeure dans le sol et est retenu, par exemple au moyen d'une épingle amovible (12) dont une branche est enfilée à travers le tube et le pied tubulaire.

14. Installation suivant l'une des revendications 12 et 13, caractérisée en ce que la lisse haute est un tube (3) posé sur la section terminale libre de chaque poteau (2) et est assemblé avec ce dernier au moyen d'une épingle amovible (49) dont une branche est enfilée à travers les branches repliées (51) d'un étrier (48) dont le fond est appuyé sur la lisse, et à travers le poteau.

15. Installation suivant l'une des revendications 12 à 14, caractérisée en ce qu'à chacune de ses extrémités (4, 7) chaque tube-support oblique (6) est muni d'une bride boulonnée (54) comportant deux griffes (59, 61) qui sont en prise avec des faces opposées de la lisse tubulaire correspondante (3, 8).

16. Installation suivant la revendication 15, caractérisée en ce que les griffes (59, 61) de forme semi-circulaire peuvent être engagées et dégagées par basculement.

17. Installation suivant l'une des revendications 12 à 16, caractérisée en ce que chaque rive de panneau comporte, outre un rebord (41) profilé en forme de quart de cylindre, un ou plusieurs perçages (42) à travers lesquels peut être engagée l'une des branches (43) d'un étrier (44) dont le fond est appuyé sur les rebords adjacents (41) de panneaux (A) juxtaposés et dans les extrémités repliées (45) duquel peut être insérée une épingle amovible (46) mise en prise avec la face inférieure d'un tube-support oblique (6) sous-jacent aux deux rebords.

## Patentansprüche

1. Platte von im allgemeinen rechteckiger Form aus durch Extrusionsblasen geformtem Kunststoff für das Einfangen von Sonnenenergie, in der eine Schlange (13) für die Zirkulation einer zu erhitzenden Flüssigkeit und zwei rohrförmige Elemente (14, 23) ausgebildet sind, die an zwei entgegengesetzten Rändern der Platte aneinandergrenzen und mit den jeweiligen Enden der Schlange für den Einlaß und Auslaß der Flüssigkeit verbunden sind, wobei eines der rohrförmigen Elemente einen Sammelabschnitt (14) bildet, dessen Enden mit den Sammelabschnitten zweier identischer aneinandergrenzender und seitlich angeordneter Platten (A) verbindbar sind, dadurch gekennzeichnet, daß das dem Sammelabschnitt (14) gegenüberliegende rohrförmige Element eine Rohrleitung bildet, die in der Ebene der Platte zum Sammelrhor senkrecht ist und sich in der Mitte des entsprechenden Plattenrandes (b) befindet, und daß dieser Rand beiderseits der mittleren Rohrleitung eine Einrichtung aufweist, die ein schnelles Zusammenbauen mit dem entsprechenden Rand einer angrenzenden identischen Platte (A) ermöglicht, die endseitig angeordnet und unter 180° gegenüber der ersten Platte ausgerichtet ist.

2. Platte nach Anspruch 1, dadurch gekennzeichnet, daß die Einrichtung für das Zusammenbauen der beiden benachbarten Platten (A₁, A₂) von der Bauart mit Nut und Zunge ist.

3. Platte nach Anspruch 2, dadurch gekennzeichnet, daß der Rand (b) einer Platte (A), der dem mit dem Sammelrohr (14) versehenen Rand gegenüberliegt, beiderseits der mittleren Rohrleitung (23) eine Nut (36) und wenigstens eine Zunge (33) hat, die durch Einfügen in die Nut (36) des Rands (b) einer benachbarten Platte (A) eingesetzt werden kann.

4. Platte nach Anspruch 3, dadurch gekennzeichnet, daß der mittlere Teil des Rands (b) einer Platte (A) aufweist: eine Aussparung (28), die die mittlere Rohrleitung (23) freigibt, und beiderseits der Nut (36) zwei Bereiche (37, 38) sowie beiderseits der Hauptzunge (33) zwei Ausschnitte (29, 31), die mit der mittleren Aussparung (28) und mit dem entsprechenden Randstreifen der Platte zwei Hilfszungen (32, 34) begrenzen, die sich an die Bereiche (37, 38) des Rands (b) einer angrenzenden Platte (A) berührend anlegen können.

5. Platte nach einem der Ansprüche 1 bis 4, dadurch gekennzeichnet, daß jeder Randbereich der Platte eine profilierte Randleiste (41) aufweist, die z. B. die Form eines Viertelzylinders hat und deren freie Kante (64) senkrecht zur Ebene der Platte von deren angrenzender Fläche im Abstand angeordnet ist.

6. Platte nach Anspruch 1, dadurch gekennzeichnet, daß am Ende (16) des Sammelrohrs (14) das Außengewinde (17) durch den Spritzguß oder auf einer nach dem Ausformen aufgebrachten Hülse gebildet ist.

7. Platte nach Anspruch 6, dadurch gekennzeichnet, daß am Ende (18) des Rohres (14) nach dem Ausformen eine Hülse mit einem umgeschlagenen Bund aufgebracht wird, die eine mit einem Flansch versehene Mutter (19) hält.

8. Platte nach einem der Ansprüche 1 bis 7, dadurch gekennzeichnet, daß das Sammelrohr (14) in Nähe eines seiner Enden (16, 18) einen Balg (72) bildet.

9. Sonnenheizanlage mit einer gewissen Anzahl von nebeneinanderliegenden Einfangelementen, dadurch gekennzeichnet, daß jedes Einfangelement (B) durch endseitigen Zusammenbau zweier Platten nach einem der Ansprüche 1 bis 8 hergestellt ist, wobei die hydraulische Verbindung zwischen den beiden Platten in an sich bekannter Weise mittels einer Verbindung (27) erfolgt, die die mittleren Rohrleitungen dicht miteinander verbindet.

10. Anlage nach Anspruch 9, dadurch gekennzeichnet, daß die Elemente (B) durch Auflage der freien Kante (64) der Randleisten (41) der Platte unmittelbar auf ·den Boden gelegt sind.

11. Anlage nach Anspruch 10, dadurch gekennzeichnet, daß die Verankerung der Elemente (B) im Boden durch Nadeln (66, 68) erfolgt, die die Platten (A) durchqueren und im Boden festgelegt sind.

12. Anlage nach Anspruch 9, gekennzeichnet durch eine rohrförmige Tragkonstruktion (1), die zum Tragen der Randbereiche der Elemente (B) parallele Rohre (6) aufweist, die in einer geneigten Ebene in gleichmäßigen Abständen angeordnet und an ihren jeweiligen Enden (4, 7) mit einer oberen Leiste (3), die durch am Boden festgelegte senkrechte Ständer (2) getragen wird, und mit einer auf den Boden gelegten unteren Leisten (8) zusammengebaut sind.

13. Anlage nach Anspruch 12, dadurch gekennzeichnet, daß jeder tragende Ständer aus einem Rohr (2) besteht, das in einen rohrförmigen Fuß (11) eingesetzt ist, der im Boden ständig verankert ist und z. B. durch eine abnehmbare Nadel (12) festgehalten wird, deren einer Schenkel durch das Rohr und den rohrförmigen Fuß gesteckt ist.

14. Anlage nach einem der Ansprüche 12 und 13, dadurch gekennzeichnet, daß die obere Leiste ein Rohr (3) ist, das auf den freien Endabschnitt jedes Ständers (2) gelegt und mit diesem mittels einer abnehmbaren Nadel (49) zusammengebaut ist, deren einer Schenkel durch die umgeschlagenen Schenkel (51) eines Bügels (48), dessen Grund auf der Leiste aufliegt, und durch den Ständer gesteckt ist.

15. Anlage nach einem der Ansprüche 12 bis 14, dadurch gekennzeichnet, daß jedes geneigte Tragrohr (6) an jedem seiner Enden (4, 7) mit einer Schelle (54) mit zwei Greifern (59, 61) versehen ist, die mit den entgegengesetzten Seiten der entsprechenden rohrförmigen Leiste (3, 8) in Eingriff stehen.

16. Anlage nach Anspruch 15, dadurch gekennzeichnet, daß die halbkreisförmigen Greifer (59, 61) durch Schwenken in und außer Eingriff gebracht werden können.

17. Anlage nach einem der Ansprüche 12 bis 16, dadurch gekennzeichnet, daß jeder Plattenrandbereich außer einer in der Form eines Viertelzylinders profilierten Randleiste (41) ein oder mehrere Bohrungen (42) aufweist, durch die der eine Schenkel (43) eines Bügels (44) eingesetzt werden kann, dessen Grund auf den angrenzenden Randleisten (41) der nebeneinanderliegenden Platten (A) aufliegt und in dessen umgeschlagene Enden (45) eine abnehmbare Nadel (46) eingesetzt werden kann, die mit der Unterseite eines unter den beiden Randleisten liegenden geneigten Tragrohrs (6) in Eingriff gebracht werden kann.

**Claims**

1. A panel having a generally rectangular shape and of plastics material moulded by extrusion and blowing, for collecting solar energy, in which there are formed a conduit (13) arranged in a serpentine manner for the circulation of a liquid to be heated, and two tubular elements (14, 23) adjacent to two opposed edges of the panel and connected to the respective ends of the conduits for the inlet and the outlet of the liquid, one of the tubular elements constituting a header section (14) whose ends are adapted to be capable of being connected in a sealed manner to the header sections of two laterally disposed adjacent identical panels (A), characterised in that the tubular element opposed to the header section (14) constitutes a nozzle (23) which is perpendicular to the header tube in the plane of the panel and is located in the centre of the edge of the corresponding panel (b) and this edge has, on each side of the central nozzle, means permitting a rapid assembly with the corresponding edge of an identical adjacent panel (A) disposed at the end thereof and oriented at 180° relative to the first panel.

2. A panel according to claim 1, characterised in that the means for assembling two adjacent panels ($A_1$, $A_2$) are of the tongue and groove type.

3. A panel according to claim 2, characterised in that the edge (b) of a panel (A) which is opposed to the edge (a) provided with the header tube (14) comprises, on each side of the central nozzle (23), a groove (36) and at least one tongue (33) adapted to engage in fitting relation in the groove (36) of the edge (b) of an adjacent panel (A).

4. A panel according to claim 3, characterised in that the central part of the edge (b) of a panel (A) has a recess (28) which clears the central nozzle (23) and, on each side of the groove (36), two lands (37, 38) and, on each side of the main tongue (33), two notches (29, 31) defining with the central recess and with the corresponding edge of the panel two auxiliary tongues (32, 34) which are adapted to be applied against the lands (37, 38) of the edge (b) of an adjacent panel (A).

5. A panel according to one of the claims 1 to 4, characterised in that each edge of the panel has a flange (41) which has for example the shape of a quarter of a cylinder and whose free edge (64) is spaced, in the direction perpendicular to the plane of the panel, from the adjacent face of the latter.

6. A panel according to claim 1, characterised in that at the end (16) of the header tube (14) the screw-thread (17) is either moulded or formed on a sleeve which is attached after stripping from the mould.

7. A panel according to claim 6, characterised in that there is mounted at the end (18) of the tube (4) after stripping from the mould a sleeve provided with a formed-over flange which retains a flanged nut (19).

8. A panel according to one of the claims 1 to 7, characterised in that the header tube (14) forms a bellows (72) in the vicinity of one of its ends (16, 18).

9. A solar heating installation comprising a certain number of juxtaposed collector elements, characterised in that each collector element (B) is produced by an end-to-end assembly of two panels (A) according to one of the claims 1 to 8, the hydraulic connection between the two panels being achieved in the known manner by means of a coupling (27) which couples in a sealed manner the adjacent central nozzles (23).

10. An installation according to claim 9, characterised in that the elements (B) are placed directly on the ground by the bearing of the free edge (64) of the flanges (41) of the panel.

11. An installation according to claim 10, characterised in that the elements (B) are anchored in the ground by means of pins (66, 68) which extend through the panels (A) and are driven into the ground.

12. An installation according to claim 9, characterised by a tubular framework (1) which includes, for supporting the edge portions of the elements (B), parallel tubes (6) evenly spaced apart in an inclined plane, and assembled at their respective ends (4, 7) with an upper rail (3) carried by vertical posts (2) fixed in the ground and with a lower rail (8) placed on the ground.

13. An installation according to claim 12, characterised in that each support post is constituted by a tube (2) which is fitted in a tubular foot (11) permanently anchored in the ground and is retained, for example by means of a detachable pin (12) having a branch which extends through the tube and the tubular foot.

14. An installation according to one of the claims 12 and 13, characterised in that the upper rail is a tube (3) placed on the free end section of each post (2) and is assembled with the latter by means of a detachable pin (49) which has a branch which extends through the folded branches (51) of a yoke (48), whose end portion bears against the rail, and through the post.

15. An installation according to one of the claims 12 to 14, characterised in that each oblique support tube (6) is provided at each of its ends (4, 7) with a bolted clamp (54) having two claws (59, 61) which engage with opposed faces of the corresponding tubular rail (3, 8).

16. An installation according to claim 15, characterised in that the claws (59, 61) of semicircular shape are capable of being engaged and disengaged by a pivotal movement.

17. An installation according to one of the claims 12 to 16, characterised in that each panel edge portion has, in addition to a flange (41) in the shape of a quarter of a cylinder, one or a plurality of apertures (42) through which may be engaged one of the branches (43) of a yoke (44) whose end portion bears against the adjacent flanges (41) of juxtaposed panels (A) and in the folded end portions (45) of which may be inserted a detachable pin (46) which is put into engagement with the lower face of an oblique support tube (6) subjacent to the two flanges.

FIG.1

FIG.2

FIG.4

FIG.3

FIG.5

0 0 2 8 9 8 2

FIG.6

FIG.8

FIG.7

0028982